Europäisches Patentamt

European Patent Office

Office européen des brevets

(11) Publication number: **0 135 822**
A2

# EUROPEAN PATENT APPLICATION

(21) Application number: **84110151.2**

(22) Date of filing: **25.08.84**

(51) Int. Cl.⁴: **B 05 B  17/00,** B 01 D  46/10,
B 01 J  4/00, B 63 B  1/38,
C 02 F  3/20, C 02 F  7/00,
E 02 B  11/00, F 16 C  32/06,
F 24 F  7/10, F 24 F  13/068,
F 26 B  25/10
// A01K63/04

(30) Priority: **02.09.83  DE 3331719**

(43) Date of publication of application: **03.04.85**
**Bulletin 85/14**

(84) Designated Contracting States: **AT BE CH DE FR GB IT
LI LU NL SE**

(71) Applicant: **Engel, Thomas Paul, Niederröderweg 12,
D-6056 Heusenstamm (DE)**

(72) Inventor: **Engel, Thomas Paul, Niederröderweg 12,
D-6056 Heusenstamm (DE)**

(74) Representative: **Wolgast, Rudolf, Dipl.-Chem. Dr. et al,
Dipl.-Phys. Jürgen Weisse Dipl.Chem. Dr. Rudolf Wolgast
Bökenbusch 41 Postfach 11 03 86,
D-5620 Velbert 11 Langenberg (DE)**

(54)   **Diffusor and methods of using the same.**

(57)   A diffusor intended for the throughpassage of a fluid
comprises a plate having a multitude of channels which extend
therethrough in a mutually parallel relationship. The channels
are closed at one of their ends and are connected to a con-
necting member at the other one of their ends. The plate is
provided on one side thereof with a permeable wall for the
throughpassage of the fluid.

0135822

## BACKGROUND OF THE INVENTION

The present invention relates to a new and improved diffusor for the throughpassage of a fluid medium and methods of using the same.

Diffusors of this type serve to achieve the most uniform possible distribution of fluid media like gases or liquids and can be utilized for most various purposes.

## SUMMARY OF THE INVENTION

It is a primary object of the present invention to provide a new and improved diffusor for the throughpassage of a fluid medium and which can be produced in the simplest possible manner for the most various purposes of use.

Another and more specific object of the present invention is directed to the provision of a new and improved diffusor for the throughpassage of a fluid medium and which enables a particularly uniform distribution of the fluid over large surface areas.

Now in order to implement these and still further objects of the invention, which will become more readily apparent as the description proceeds, the diffusor of the present development is manifested by the features that, the diffusor comprises a plate-like structure defining two opposite side

0135822

walls, a mutlitude of channels extending through the plate-like structure in a mutually substantially parallel relationship between the two opposite side walls and at least one communicating member communicating with the multitude of channels. A substantial portion of one of the two opposite side walls constitutes a permeable side wall and such permeable side wall substantially covers the multitude of channels on the side of the one side wall.

Advantageously the plate or plate-like structure of the diffusor according to the invention is made permeable by providing a multitude of holes or slots which are regularly arranged in a mutually spaced relationship and which communicate with the channels, in the side or side wall on one side of the plate. Such side wall can also be made of an open porous cell structure to produce the desired fluid permeability. In order to obtain a uniform pressure drop over the entire area of the inventive diffusor, the permeability preferably increases proportionally with the distance from the connecting member.

In a modification for drainage purposes the aforementioned permeable plate of the diffusor according the invention may further comprise a water-permeable layer.

Another variant of the inventive diffusor is equipped with a further connecting member permitting a series-arrangement of such diffusors.

0135822

According to the invention an apparatus for the gas treatment of a liquid comprises a source of pressurized gas which produces a pulsating flow of the gas and further comprises means arranged in a body of the liquid and connected to this source of pressurized gas in order to generate a stream of fine bubbles rising in the body of liquid.

The means for generating the stream of fine bubbles rising in the body of liquid are constituted by any suitable conventional means like, for example, a filter member made of porous sintered material or similar devices. Preferably such means are constituted by a diffusor of the type mentioned hereinbefore which comprises a plate-like structure defining two opposite side walls, a multitude of channels extending through the plate-like structure in a mutually substantially parallel relationship between the two opposite side walls and at least one communicating member communicating with the multitude of channels. A substantial portion of one of the two opposite side walls constitutes a permeable side wall substantially covering the multitude of channels.

The diffusors also can be used in accordance with the invention for uniform gas introduction into liquids, for example, for the aeration of water, also of natural waters. They can be generally used at an advantage for the ventilation or aeration of rooms and specifically for gassing drying chambers in which farm products like fruits or tobacco are stored, and they can be beneficially employed in the process of cheese ripening.

Depending on the related purpose of use, the diffusor can be connected to a pressure source or to a vacuum source which, if desired, may comprise a pulsating pressure source or vacuum source in order to carry out the gassing operation.

Preferably, for the gassing of liquids, weighting agents like metals or minerals can be added to the material from which the diffusor is made prior to or after the extrusion in order to increase its weight so that such diffusors may sink in water.

An advantageous method according to the invention for using the aforementioned diffusor comprises the steps of arranging the diffusor at a surface and connecting the diffusor to a source of pressurized gas. In this manner any friction which exists between the surface and its environment can be significantly reduced. This is of particular importance in connection with the hull of a ship since the friction between the ship's hull and the water thus can be considerably reduced whereby energy can be saved or better propulsion performance can be achieved.

The inventive diffusor can be used for drawing-off or draining purposes, for example, in the ground in combination with water-pervious fabric or paper.

BRIEF DESCRIPTION OF THE DRAWINGS

The invention will be better understood and objects other than those set forth above will become apparent when consideration is given to the

following detailed description thereof. Such description makes reference to the annexed drawings wherein generally the same reference characters have been used to denote the same or analogous components and wherein:

Figure 1a shows a cross-section through a diffusor according to the invention;

Figure 1b is a plan view of a longitudinal section through the diffusor shown in Figure 1a;

Figure 1c shows a top plan view of the diffusor shown in Figure 1b and illustrates different structures for providing fluid permeability on one side thereof;

Figure 1d shows a top plan view of the diffusor shown in Figure 1b and illustrates a diffusor provided with a regular arrangement of gas-permeable regions;

Figure 2 to 5 illustrate different steps in a process of providing the diffusor shown in Figure 1 with a connecting member;

Figure 6 is a view of part of a further embodiment of the inventive diffusor provided with a modified arrangement of the connecting member;

Figure 7 is a partial view of another embodiment of the inventive diffusor provided with a different arrangement of the connecting member;

Figure 8 is a cross-sectional view of a rectangular slot in the side wall of the diffusor shown in Figure 1c and illustrates the restoring process occurring therein;

Figure 9 schematically illustrates a still further embodiment of the diffusor provided with a further connecting member for series-connection;

Figure 10 is a schematic cross-sectional illustration of a diffusor for ultrafiltration according the invention;

Figure 11 shows a schematic cross-sectional view of a diffusor for draining purposes according to the invention; and

Figure 12 is a schematic illustration of a gas-treatment installation according to the invention.

## DETAILED DESCRIPTION OF THE PREFERRED EMBODIMENTS

Describing now the drawings, it is to be understood that only enough of the structure of the diffusor has been shown as needed for those skilled in the art to readily understand the underlying principles and concepts of the present development, while simplifying the showing of the drawings. Turning attention now specifically to Figure 1a, there has been shown a cross-section of the inventive diffusor comprising a plate-like structure or plate 1 which has two opposite sides or side walls 7,7' and through which there extends a multitude of mutually substantially parallel channels or passages 2. The latter are separated by partitions or walls 3 and run substantially parallel to the sides or side walls 7,7'. There is provided at the plate-like structure or plate 1 a connecting member 6 which is structured for connection to a fluid line which may be a hose, a pipe, or any other kind of fluid-conducting conduit means. The plate-like structure or plate 1 is also provided at one end thereof with a communicating space 6' which is in communication on a first side 5 with the multitude of channels or passages 2 and which is in communication on a second side 6'' opposite the first side 5 with the connecting member 6. The two sides 5,6'' extend substantially transversely relative to the multitude of channels or passages 2. At the end remote from the communicating space 6' the plate-like structure or plate 1 and thus the multitude of channels or passages 2 is sealed or closed by a sealed or closed edge 4 extending transversely to the multitude of channels or passages 2.

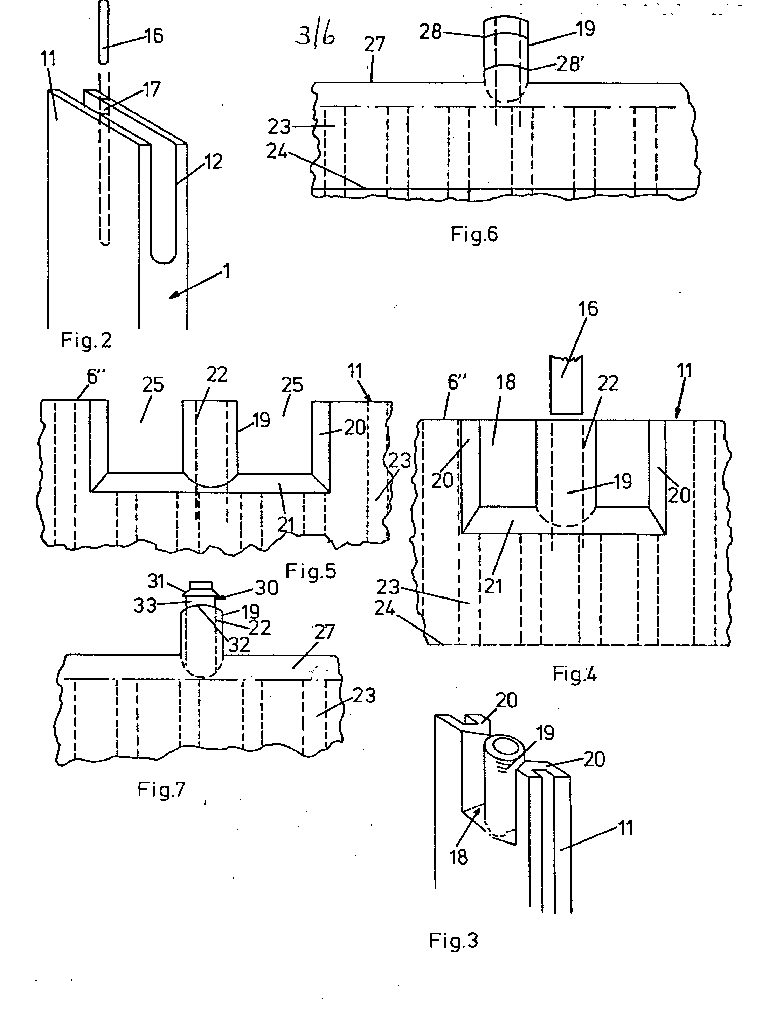

The plate-like structure or plate 1 is made of a suitable plastic or rubber material and is produced by an extrusion process (Reifenhäuser GmbH Maschinenfabrik, Troisdorf; W.-Germany). The production of the connecting member 6 will be explained in detail hereinafter with reference to Figures 2 to 7 of the drawings.

Figure 1c is a top plan view of the inventive diffusor and serves to schematically illustrate the general type of passage openings 8 by which the related side or side wall 7,7' of the plate-like structure or plate 1 can be made permeable for fluids which enter the diffusor through the connecting member 6. The partitions or walls 3 are also indicated in Figure 1c. The entirety or at least a substantial portion of the side or side wall 7 or 7' of the plate-like structure or plate 1 can be provided with one type or different types of the permeability-causing passage openings 8 illustrated in Figure 1c. The passage openings 8 are disposed such as to communicate with the channels or passages 2. There is provided a multitude of such passage openings 8 which are regularly arranged in a mutually spaced relationship.

As shown on the left-hand side of Figure 1c, the passage openings 8 may comprise a multitude of very fine holes 8' or a smaller number of somewhat greater holes 8''. The holes 8',8'' are arranged along the channels or passages 2 and can be formed in the side or side wall 7 of the plate-like structure or plate 1 by any conventional operation like, for example, by punching, piercing, boring or burning. Particularly fine holes 8' are obtained by using fine needles each of which has a diameter of about 0,5 mm for piercing the related side or side wall 7,7'. Due to the restoring capacity of the material of which the plate-like structure or plate 1 is made, the resulting holes 8' only have diameters in the range of 0,3 mm. The restoring process occurs in the course of time but can be accelerated by an annealing action under the influence of heat. In this manner holes 8' of diameters in the range of 0,05 mm can be produced in the related side or side wall of 1 mm thickness.

The holes 8',8'' can be produced in such a manner as to have a constant cross-section or diameter throughout their length. However, the holes 8',8''

may also widen, for example, in a conical shape in a direction towards the exterior of the plate-like structure or plate 1 whereby such holes become less readily obstructed.

In the variant shown at the center of Figure 1c the passage means 8 comprise a multitude of holes 8'' formed in a generally oblong shape.

In the modification shown on the right-hand side of Figure 1c the passage openings 8 comprise a multitude of slots 8''''. The slots 8'''' are formed using conventional tools and may extend in a lengthwise direction of the related channel or passage 2 as shown but may also extend in a crosswise relationship thereto. As further shown, the passage openings 8 may also comprise a multitude of intercrossing slots $8^V$ . The slots $8'''',8^V$ illustrated in Figure 1c have a basically rectangular shape; however, the slots may also assume any other shape which is suited to produce the desired permeability in the related side or side wall 7,7' of the plate-like structure or plate 1.

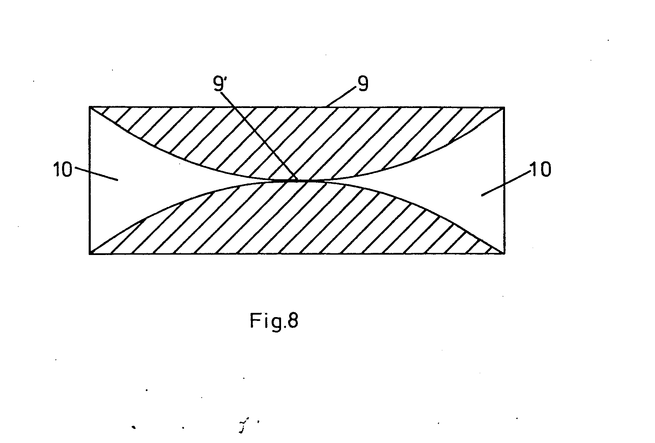

The restoring capacity of the material of which the plate 1 is made can also be utilized for the formation of fine holes which is illustrated in Figure 8. There are shown in Figure 8 the original perimeter 9 of a rectangular slot punched into the related side or side wall 7,7' of the plate-like structure or plate 1 in the region of a channel or passage 2. Due to the restoring process, the slot becomes constricted by material which flows into the slot from the two opposite long sides. The flow is stopped when the materials emerging from the two sides contact each other. While the originally formed slot is then closed at the contact location 9', there remain two very fine holes 10 in the region of the two small sides of the original rectangular slot. As already noted hereinbefore, the restoring process, although proceeding in the course of time at ambient temperature, can be furthered by an annealing-like action at higher temperatures.

In all the aforementioned structures the passage openings 8 may be configured and arranged such that the permeability of the related side or side wall 7,7' increases proportionally with increasing distance from the connecting member 6 whereby a uniform pressure drop can be achieved along the entire length of the diffusor.

There are still other means for generating fluid-permeability in one side wall 7,7' of the plate-like structure or plate 1. For example, a water-soluble material can be added to the material from which the plate 1 is produced by extrusion. The plate obtained by the extrusion is subjected to water treatment, whereby the water-soluble material is dissolved out therefrom so that a fluid-permeable or open porous cell structure remains.

In a further process for producing a fluid-permeable plate-like structure or plate 1 a swelling or expanding agent is added to the material from which the plate 1 is produced either prior or during the extrusion-like process. Porosity and thus fluid-permeability is thereby produced in the material of which the plate 1 is made.

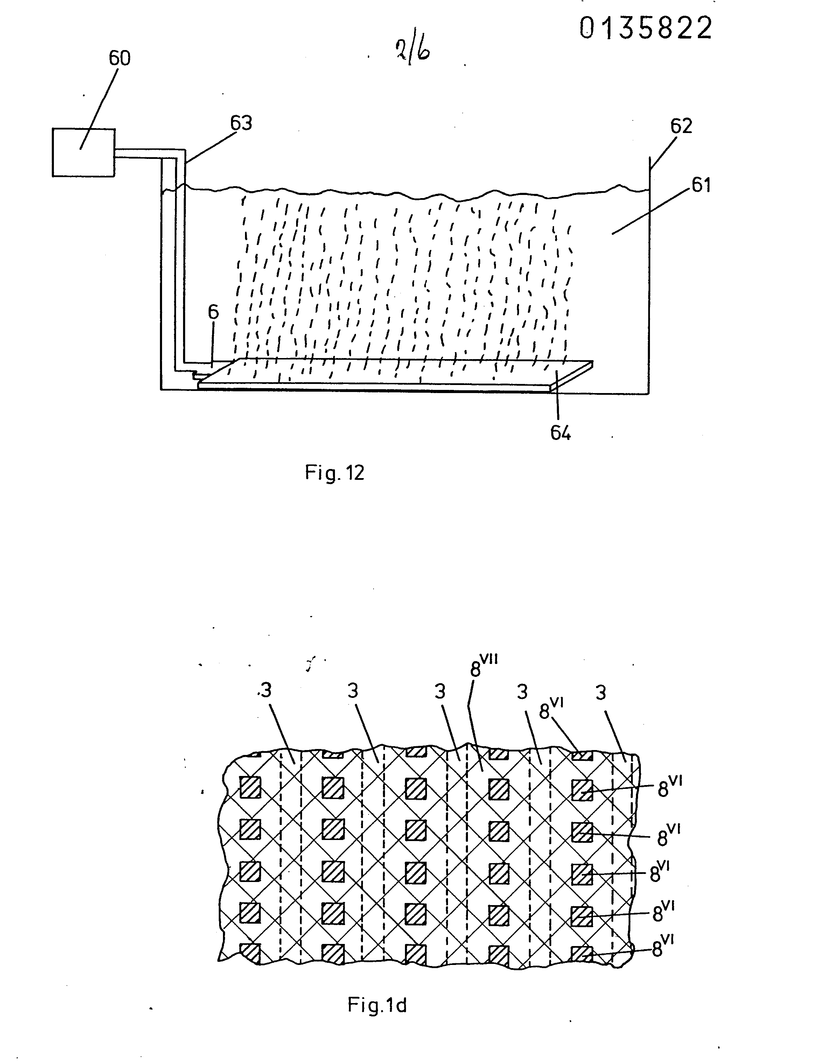

Preferably, the open porous cell structure obtained either by solution treatment or by expansion is completely sealed on one side of the plate-like structure. The other side is partially sealed in such a manner that a multitude of gas-permeable regions $8^{VI}$ embedded in a sealed structure $8^{VII}$ is obtained which are regularly arranged in mutually spaced relationship. The regions $8^{VI}$ are rectangularly shaped as illustrated in Figure 1d but may assume any other appropriate shape. Also, while each of the regions $8^{VI}$ may be associated with one of the channels 2 in the plate-like structure 1 as shown in Figure 1d, the gas-permeable region $8^{VI}$, if desired, may also extend over more than one such channel 2.

The production or formation of the connecting member 6 at the plate-like structure or plate 1 will now be explained in detail with reference to Figures 2 to 7 of the drawings. In a first step of the process the partitions or walls 3 between the channels or passage 2 are severed or cut at one end portion 11 of the plate-like structure or plate 1, for example, by means of a suitable cutting device. The opposite edge 4 is sealed or closed as for example, by welding. An insert 16 is then inserted into the end portion 11 and retained in a position which is generally indicated by reference numeral 17. The insert 16 may be made of any appropriate material like metal or plastic and may either be of solid or tubular material.

The insert 16 may be releasably mounted at a removable retaining member which may be part of either the extruder for producing the plate-like structure or plate 1 or of the clamping tool mentioned hereinafter. The extruder, however, can also be constructed in such a manner that the insert 16, which is made of a material compatible with that of the plate 1, is extruded or injected into the material of the plate 1.

Thereafter a heatable shaping or molding clamping tool of conventional construction is applied to the material of the plate-like structure or plate 1 in the region of the end portion 11 thereof on both sides of the insert 16. Under the action of the heat and pressure of the clamping tool the material melts and forms a sealed constriction 18 including a protruding portion 19 which encloses the insert 16. The end portion 11 forms laterally and inwardly converging ledges 20 during this operation and the ledges 20 laterally define the constriction 18. The product of this step is shown in a perspective view in Figure 3. In the side view of Figure 4 there are recognized the ledges 20 formed in the end portion 11, the constriction 18 with its bottom portion 21 and the protruding portion 19 from which the insert 16 is removed. The tubular portion thus obtained has an internal passage or bore 22 and constitutes the connecting member 6. Instead of the solid insert 16 there can also be used a tubular insert selected from materials which are fixedly connected and retained by the protruding portion 19 as a result of the action of the heatable clamping tool on the end portion 11. If desired, the protruding portion 19 and thus the connecting member 6 can be provided with sealing ribs or other known sealing elements in order to permit a sealed connection thereof to the fluid-conducting conduit means.

After the formation of the connecting member 6 the still open edge of the plate-like structure or plate 1 is sealed or closed across the width of the plate-like structure or plate 1 so that a communicating space 23 is formed and bounded by a first side 24 and a second side 6'' which extend transversely relative to the multitude of channels or passages 2. The space 23 communicates with the channels or passages 2 on the first side 24 which is defined by the depth of severing or cutting of the partitions or walls 3 and with the connecting member 6 constituted by the protruding portion 19 on the second side 6'' which constitutes a sealed edge and comprises the ledges 20 and the bottom portion 21.

In a further step the material forming the constriction 18 between the protruding portion 19 and the ledges 20 can be removed so that a structure results which is illustrated in Figure 5 and which comprises free spaces 25 between the portion 19 and the ledges 20.

A further embodiment of the inventive diffusor is shown in part in Figure 6. In this embodiment a continuous, sealed or closed outer edge at the plate-like structure or plate 1 forms a second side 27 of the communicating space 23 while the connecting member 6 constitutes a protruding portion which is structured like the protruding portion 19 described hereinbefore with reference to Figures 2 to 5. The protruding portion 19 is also produced in an essentially analogous manner and is provided with two sealing ribs or lips 28,28' which permit a fluid-tight connection to the fluid-conducting conduit means.

A partial side view of another embodiment of the inventive diffusor is shown in Figure 7. In this embodiment the second side of the communicating space 23 can be formed as shown in Figures 2 to 5, but may also be formed as shown in Figure 6. A tubular insert 30 is fitted into the internal passage or bore 22 of the protruding portion 19 and is fixedly connected thereto by, for example, welding, adhesive bonding or the like. A sealing rib or lip 31 is formed at the tubular insert 30 so that a reduced portion 33 is formed between the sealing rib or lip 31 and the end 32 of the protruding portion 19. Any conduit means connected to the connecting member thus formed can be secured by applying thereto a pipe clamp or clip or the like in the region of the reduced portion 33.

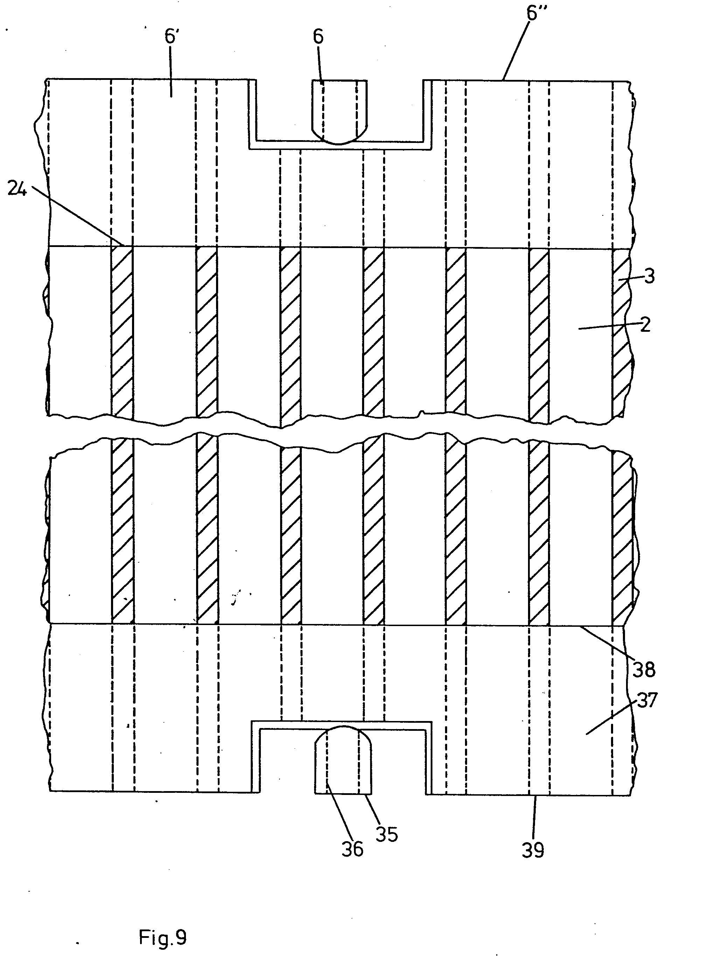

A still further embodiment of the diffusor is schematically illustrated in Figure 9. In this embodiment there are provided a further communicating space 37 and a further connecting member 35 at the plate-like structure or plate 1 at a location which is remote from the communicating space 23 or the connecting member 6. The further communicating space 37 is produced in a manner analogous to the production of the communicating space 23. It has a first side 38 defined by the depth of severing or cutting and communicating with the multitude of channels or passages 2. It has a second side 39 essentially constituting a sealed edge and connected to the further connecting member 35 which has a passage or bore 36. While the illustrated embodiment has a structure as shown in Figure 7, each of the connecting members 6,35 can have any one of the structures described hereinbefore and is connectable to any appropriate fluid-conducting conduit means. Diffusors of this type can be interconnected in series.

The communicating space 23 and/or 37 can also be provided at the plate-like structure or plate 1 by welding to either one or both ends thereof, in any appropriate manner known in the art of plastic material processing, a space or chamber defining structure. Such structure is provided with a suitable connecting member of the general kind as described hereinbefore or the connecting member can be affixed thereat later.

A gas treatment apparatus for the gas treatment of a liquid generally contains a source of pressurized gas and means arranged in a body of the liquid and connected to the source of pressurized gas. In the apparatus according to the invention the source of pressurized gas is selected of the type which produces a pulsating flow of gas like, for example, a twin membrane compressor (Thomas Industries, Inc., Shebeugan, Wisc.; Type 1502). It has been found that such pulsating flow of the gas results in a particularly favourable and effective distribution of the gas in the liquid to be treated. Any means such as, for example, a filter member of porous, sintered material which generates a stream of fine rising bubbles may be connected to the source of the pulsating gas flow. In the specific embodiment illustrated in Figure 12, the gas treatment apparatus comprises a source 60 which produces a pulsating flow of air and aerates a body 61 of water in a tank or container 62 which is open at the top. A connecting line or conduit 63 interconnects the source 60 and the connecting member 6 of a diffusor of the type as illustrated in Figures 1a to 1d and which is generally designated by the reference numeral 64. The pulsating gas flow in combination with the regular arrangement of mutually spaced holes or slots or permeable regions in the diffusor 64 results in a very efficient aeration of the body 61 of water but can also be employed, of course, for the treatment of any other kind of liquid with any appropriate gas.

The different diffusors of the types as described hereinbefore can be used for a multitudinous variety of different purposes. The diffusor, for example, can be utilized for the aeration of water like the water in fish ponds when connected to a suitable air source. For this purpose the diffusor is anchored at the bottom of the body of water and connected to a source of pressurized air by a hose, a pipe or any other appropriate conduit means. A specifically favorable bubble distribution can be obtained when a pulsating air flow is used for the aeration. Such pulsating gas flows can be generated by, for example, a twin-membrane compressor (Thomas Industries, Inc., Shebeugan, Wisc.; Type 1502).

The material of which the diffusor is made may also contain a weighting material like metal or mineral which is added thereto either prior to or after the manufacture of the diffusor and which enables the diffusors to be laid out at the bottom of a body of water. The diffusors can also be series-connected when using the embodiment shown in Figure 9. The aeration in any case is extremely effective and thus advantageous because there is generated thereby a stream of finely distributed air bubbles which rise in a uniform manner from an extended or large surface.

The diffusor can furthermore be employed with advantage for the uniform gassing or degassing of rooms or chambers or the like when respectively connected to a suitable source of excess pressure or vacuum. Such gassing or degassing may be utilized, for example, for all kinds of air drying operations but is also particularly useful in the dairy industry and there specifically in connection with cheese producing operations.

A further and particularly desirable use of the inventive diffusor is related to gas filtration in combination with suitable filter means which are placed on the outside of the permeable side or side wall 7 and/or 7' of the diffusor. Such use is of high importance for the aeration of confined spaces such as, for example, shelters of the most different kinds. Of course, such arrangements are preferably also employed in combination with air conditioning installations.

The diffusors as described hereinbefore and when connected to a source of pressurized gas can be used to generate a friction-reducing layer of gas, for example, at the outer wall of the hull of a ship. A thin film of air can be generated in this manner between the hull of the ship and the surrounding water which quite considerably reduces the hull's friction in water and thereby significantly reduces the energy for the ship's propulsion. There can thus be achieved either a reduction in the energy consumption or considerably increased propulsion performance at unaltered energy consumption.

The diffusors of the type as described hereinbefore can also be used at an advantage for cooling purposes, for example, in combination with air conditioning installations for water cooling purposes as well as for air cooling purposes. The fine distribution of the respective fluid medium by such diffusors over a large area or through a large space is specifically beneficial for the effective heat exchange desired in such installations.

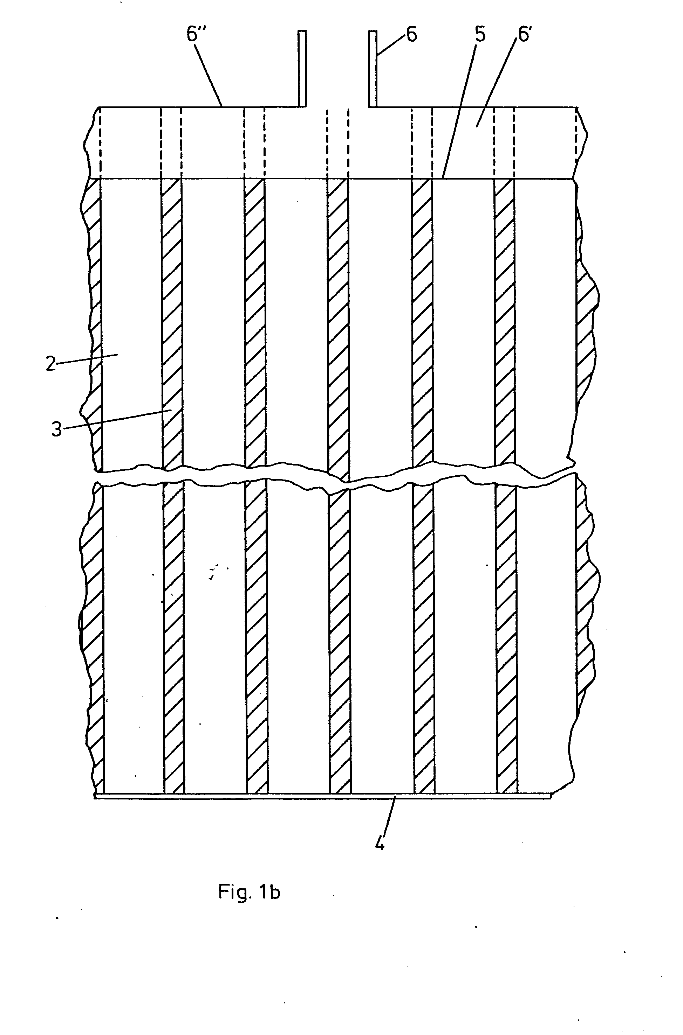

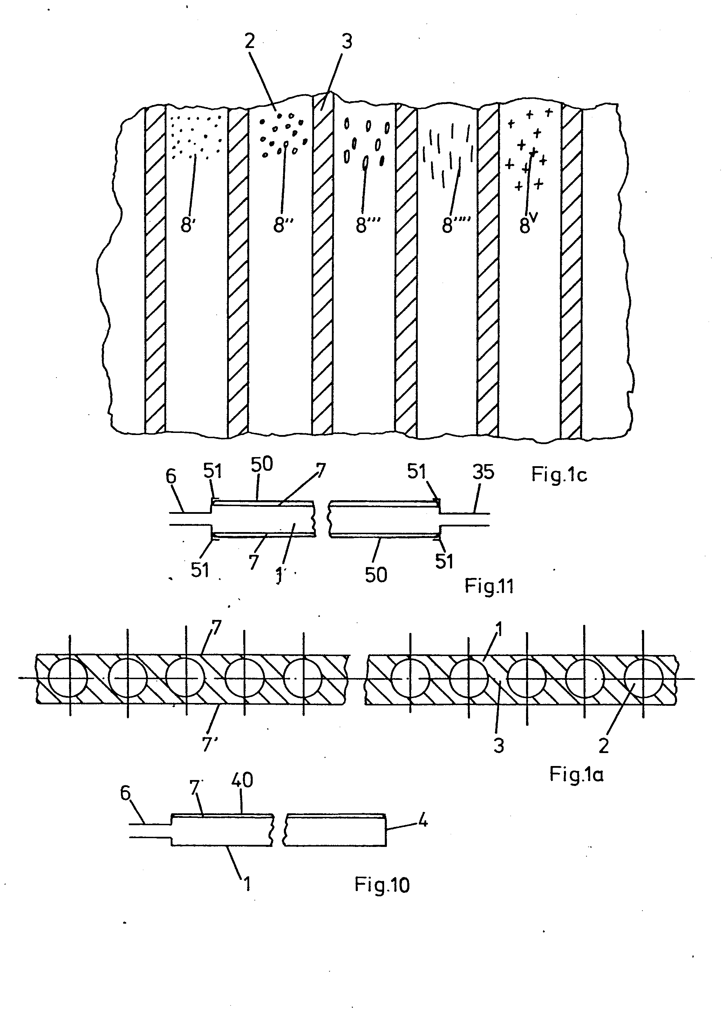

Figure 10 shows a diffusor including a filter layer 40 in a schematic cross-sectional illustration. The diffusor corresponds to any one of the diffusors illustrated in Figures 1a,b,c,d to 4 but may also be of the type shown in either one of Figures 5 to 9. The side or side wall 7 of the plate-like structure or plate 1 is made permeable by any one of the means described hereinbefore with reference to Figures 1c,1d and 8. The side or sidewall 7 is covered by a filter layer 40 which is mounted at the plate-like structure or plate 1 in any suitable manner by conventional mounting means. Such diffusors are useful for the filtration of gas, for example, for the removal of dust or any particles contained in a gas.

Furthermore, the diffusor illustrated in Figure 10 and containing the filter layer 40 can also be used for the gas treatment of liquids by connecting the connecting member 6 thereof to a source of pressurized gas, particularly to a source of the kind as mentioned with reference to Figure 12 and which produces a pulsating gas flow. When the diffusor is placed in the body of liquid to be treated, there is obtained a stream of rising very fine gas bubbles during the operation of the source of pressurized gas and such very fine gas bubbles are favorable for a particularly effective gas treatment. Interaction between adjacent gas bubbles can be considerably reduced, if the filter layer 40 is partially sealed in such a manner that a regular arrangement of spaced gas-permeable regions is formed, i.e. if the filter layer 40 has a structure which is analogous to the structure of the gas-permeable sode or side wall of the diffusor illustrated in Figure 1d.

Figure 11 is a schematic cross-sectional view of a diffusor which is modified for drainage purposes. Therefor the plate-like structure 1 is provided with connecting members 6 and 35 as shown in Figure 9 and a number of diffusors are series-connected via the related adjacently located connecting members; the first connecting member 6 and the last connecting member 35 are connected to respective drain lines. However, diffusors of the type illustrated in Figures 1a,b,c,d to 8 can also be utilized for this purpose; as the case may be, there can either be employed a single, large-surface diffusor or a number of smaller diffusors in a separate, spaced arrangement and each connecting member 6 is connected to a collective drain line.

The plate-like structure or plate 1 is bounded by two permeable sides or side walls 7,7' although it may be sufficient to employ diffusors having only one permeable side wall 7 or 7'. The permeability can be caused by any one of the means described hereinbefore with reference to Figures 1c and 8.

The permeable side or side wall 7 and/or 7' is covered by a filtering material or filter-web generally designated by the reference numeral 50 and essentially consisting of a filter web mounted at the related side wall 7,7'. The filter web may be made of paper or fabric or any other material suitable as a filtering material and adapted to the related filtering conditions. The filtering material 50 is removably mounted at the related side or side wall 7,7' by a retaining or guiding structure 51 secured thereto but may also be held at the related side wall 7,7' by any other conventional holding means. The entire arrangement is placed in the ground or region to be drained; conventional drain lines and pumps are connected to the connecting members of the related diffusor arrangements and are operated in conventional manner to conduct the draining operation.

While there are shown and described present preferred embodiments of the invention, it is to be distinctly understood that the invention is not

22

0135822

limited thereto, but may be otherwise variously embodied and practiced within the scope of the following claims. ACCORDINGLY,

WHAT I CLAIM IS:

1.  A diffusor for throughpassage of a fluid medium, comprising:

    a plate-like structure defining two opposite side walls;

    a multitude of channels extending through said plate-like structure in a mutually substantially parallel relationship between said two opposite side walls;

    at least one connecting member communicating with said multitude of channels;

    a substantial portion of one of said two opposite side walls constituting a permeable side wall; and

    said permeable side wall substantially covering at least said multitude of channels on the side of said one side wall.

2.  The diffusor as defined in claim 1, wherein:

    said multitude of channels extends substantially parallel to said one of said two opposite side walls of said plate-like structure.

24

0135822

3. The diffusor as defined in claim 1, further including:

a communicating space provided at said plate-like structure and defining a first side which extends substantially transversely relative to said multitude of channels;

said communicating space communicating on said first side thereof with said multitude of channels; and

said communicating space being provided with said at least one connecting member.

4. The diffusor as defined in claim 3, wherein:

said plate-like structure is provided with a sealed edge extending transversely relative to said multitude of channels at a location remote from said communicating space.

5. The diffusor as defined in claim 1, further including:

at least one further connecting member communicating with said multitude of channels at a location remote from said at least one connecting member.

6. The diffusor as defined in claim 5, further including:

0135822

a further communicating space provided at said plate-like structure at a location remote from said at least one connecting member;

said further communicating space defining a first side which extends substantially transversely relative to said multitude of channels;

said further communicating space communicating on said first side thereof with said multitude of channels; and

said further communicating space being provided with said at least one further connecting member.

7. The diffusor as defined in claim 1, wherein:

said permeable side wall has a permeability which increases proportionally with increasing distance from said at least one connecting member.

8. The diffusor as defined in claim 1, wherein:

said permeable side wall is of a perforated structure.

9. The diffusor as defined in claim 8, wherein:

said perforated structure comprises a multitude of holes regularly arranged in a mutually spaced relationship.

10. The diffusor as defined in claim 9, wherein:

said perforated structure comprises holes of increasing diameter in an outward direction.

11. The diffusor as defined in claim 8, wherein:

said perforated structure comprises a multitude of slots regularly arranged in a mutually spaced relationship.

12. The diffusor as defined in claim 1, wherein:

said permeable side wall comprises a partially sealed, open porous cell structure containing a multitude of gas-permeable regions regularly arranged in a mutually spaced relationship; and

each one of said gas permeable regions communicating with at least one of said multitude of channels extending through said plate-like structure.

13. The diffusor as defined in claim 1, wherein:

said plate-like structure comprises a plastic material.

14. The diffusor as defined in claim 1, wherein:

said plate-like structure comprises a rubber-like material.

15. The diffusor as defined in claim 1, wherein:

said plate-like structure is provided with a weighting agent.

16. The diffusor as defined in claim 1, further including:

a filter layer; and

said filter layer being mounted at said one side wall the substantial portion of which constitutes said permeable wall.

17. The Diffusor as defined in claim 16, wherein:

said filter layer is provided with a multitude of gas-permeable regions regularly arranged in a mutually spaced relationship.

18. An apparatus for the gas-treatment of a liquid, comprising:

a source of pressurized gas generating a pulsating flow of the pressurized gas;

means arranged in a body of the liquid und

28

connected to said source of pressurized gas in order to generate a stream of fine gas bubbles rising in said body of liquid.

19. The apparatus as defined in claim 18, wherein:

said means for generating a stream of fine bubbles rising in the body of liquid constitute at least one diffusor arranged in the body of liquid;

said diffusor comprising:

a plate-like structure defining two opposite side walls;

a multitude of channels extending through said plate-like structure in a mutually substantially parallel relationship between said two opposite side walls;

at least one connecting member communicating with said multitude of channels;

a substantial portion of one of said two opposite side walls constituting a permeable side wall; and

said permeable side wall substantially covering at least said multitude of channels on the side of said one side wall.

20. A method of introducing a gas into a liquid, said method including the steps of:

arranging means for generating a stream of rising fine gas bubbles in a body of the liquid;
connecting said bubble generating means to a source of pressurized gas which produces a pulsating flow of gas; and

feeding said pulsating flow of gas through said means arranged in said body of liquid in order to generate therein said stream of rising fine gas bubbles.

21. A method of using a diffusor comprising a plate-like structure with two opposite side walls, a multitude of channels extending through said plate-like structure, one of said two side walls being permeable at least in the region of said multitude of channels, and at least one connecting member, said method including the steps of:

arranging at least one such diffusor in a body of a liquid;

connecting the at least one connecting member of said at least one diffusor to a source of pressurized gas; and

passing said pressurized gas through said diffusor in order to form a stream of very finely distributed gas bubbles and to uniformely gas said body of liquid.

30

0135822

22. The method as defined in claim 21, wherein:

the step of passing said pressurized gas through said diffusor includes the step of passing therethrough a pulsating gas flow.

23. The method as defined in claim 21, wherein:

the step of passing said pressurized gas through said diffusor and said body of liquid includes the step of exchanging heat between said gas and said liquid.

24. A method of using a diffusor comprising a plate-like structure with two opposite side walls, a multitude of channels extending through said plate-like structure, one of said two side walls being permeable at least in the region of said multitude of channels, and at least one connecting member, said method including the steps of:

arranging at least one such diffusor in a confined space;

connecting the at least one connecting member of said at least one diffusor to a source of superatmospheric or subatmospheric gas pressure; and

ventilating said confined space by passing a flow of said gas through said at least one diffusor under the action of said superatmospheric or subatmospheric gas pressure.

25. The method as defined in claim 24, wherein:

said step of arranging said at least one diffusor in a confined space includes the step of arranging said at least one diffusor in a drying chamber.

26. The method as defined in claim 24, wherein:

said step of ventilating said confined space includes the step of passing a pulsating flow of gas through said at least one diffusor.

27. A method of using a diffusor comprising a plate-like structure with two opposite side walls, a multitude of channels extending through said plate-like structure, one of said two side walls being permeable at least in the region of said multitude of channels, and at least one connecting member, said method including the steps of:

arranging at least one such diffusor between two closely adjacent surfaces;

connecting said at least one connecting member of said at least one diffusor to a source of a pressurized fluid ; and

passing said pressurized fluid through said at least one diffusor and between said two closely adjacent surfaces in order to reduce friction therebetween.

28. The method as defined in claim 27, wherein:

the step of arranging said at least one diffusor includes the step of arranging the same between the hull of a ship and a body of water in which said hull is immersed.

29. A method of using a diffusor comprising a plate-like structure with two opposite side walls, a multitude of channels extending through said plate-like structure, one of said two side walls being permeable at least in the region of said multitude of channels, and at least one connecting member, said method including the steps of:

mounting a liquid-pervious filter web at said one side wall of said diffusor;

arranging at least one such diffusor with said filter web mounted thereat within a liquid containing body;

connecting said at least one connecting member of said at least one diffusor to a drain line of drainage means; and

passing said liquid through said filter web and said at least one diffusor under the action of said drainage means in order to drain said liquid from said liquid containing body.

30. A method of using a diffusor comprising a plate-like structure with two opposite side walls, a multitude of channels extending through said plate-like structure, one of said two side walls being permeable at least in the region of said multitude of channels, and at least one connecting member, said method including the steps of:

mounting a filter web at said one side wall of said diffusor;

arranging at least one such diffusor with said filter web mounted thereat in the atmosphere of a contaminated gas;

connecting said at least one connecting member of said at least one diffusor to a vacuum source; and

passing said contaminated gas through said filter web and said at least one diffusor under the action of said vacuum source in order to remove the contaminants from said gas.

1/6                    0135822

Fig. 1b

Fig. 12

Fig.1d

0135822

3/6

Fig.6

Fig.2

Fig.5

Fig.4

Fig.7

Fig.3

Fig.8

Fig.9

Fig.1c

Fig.11

Fig.1a

Fig.10